# EUROPÄISCHE PATENTSCHRIFT

(11) **EP 1 354 786 B1**
(45) Veröffentlichungstag und Bekanntmachung des Hinweises auf die Patenterteilung: **17.05.2006**
(21) Anmeldenummer: 03007549.3
(22) Anmeldetag: 01.04.2003
(51) Int. Cl.: B62D 5/09

(54) **Hydraulische Lenkeinrichtung**
Hydraulic steering device
Dispositif de direction hydraulique

(30) Priorität: 18.04.2002 DE 10217358; 10.01.2003 DE 10300686
(43) Veröffentlichungstag der Anmeldung: 22.10.2003
(73) Patentinhaber: STILL GMBH, D-22113 Hamburg (DE)
(72) Erfinder: Stall, Eugen, Dr., 53819 Neunkirchen (DE)
(74) Vertreter: Geirhos, Johann

(56) Entgegenhaltungen:
- EP-A- 0 872 405
- EP-A- 0 937 628
- DE-C1- 19 615 544
- US-A- 4 955 445

## Beschreibung

Die Erfindung betrifft eine hydraulische Lenkeinrichtung mit einem Lenkwinkelgeber, der mit einem Lenkventil in Verbindung steht, das in Abhängigkeit von der Betätigung des Lenkwinkelgebers die Verbindung eines insbesondere als Lenkzylinder ausgebildeten Lenkantriebs mit einer Druckmittelquelle und einem Behälter steuert, und einer Korrektureinrichtung, die eine Synchronisation zwischen der Stellung des Lenkwinkelgebers und der Stellung des Lenkantriebs ermöglicht, wobei die Korrektureinrichtung bei in einem Referenzbereich, der im Bereich der Geradeausfahrtstellung des Lenkantriebs ausgebildet ist, befindlichem Lenkantrieb und von dem Referenzbereich abweichender Stellung des Lenkwinkelgebers eine Synchronisation der Stellung des Lenkwinkelgebers mit der Stellung des Lenkantriebs ermöglicht.

Hydraulische Lenkungseinrichtungen, bei denen ein von einem Lenkwinkelgeber, beispielsweise einem Lenkrad, betätigtes Lenkventil die Beaufschlagung eines Lenkantriebs, beispielsweise eines Lenkzylinders, der an einer Lenkachse mit den gelenkten Rädern in Wirkverbindung steht, steuert, werden in Arbeitsmaschinen, beispielsweise Baumaschinen oder Flurförderzeugen, eingesetzt. Bei derartigen hydraulischen Lenkeinrichtungen kommt es aufgrund von Leckagen an dem Lenkventil und/oder dem Lenkzylinder zu Abweichungen zwischen der Stellung des Lenkantriebs und der Stellung des als vorzugsweise als Lenkrad ausgebildeten Lenkwinkelgebers.

Diese Leckagen führen dazu, dass die Drehposition des Lenkrades und die Stellung der gelenkten Räder nicht immer übereinstimmen und somit synchron sind. Besonders für die Geradeausfahrstellung des Lenkantriebs treten aufgrund der Leckagen unterschiedliche Drehpositionen des Lenkrades auf. Für eine Bedienperson einer derartigen Arbeitsmaschine führt dies zu unangenehmen Situationen, da die Zuordnung der Drehposition des Lenkrades mit der Stellung der gelenkten Räder nicht eindeutig und beständig ist. Zudem können hierdurch gefährliche Betriebssituationen auftreten, wenn die Bedienperson an dem Lenkwinkelgeber beispielsweise die Geradeausfahrstellung vorgibt, die Arbeitsmaschine aber aufgrund der nicht synchronen Zuordnung zwischen der Stellung des Lenkwinkelgebers und der Stellung des Stellung des Lenkantriebs eine Kurve fährt. Dieses Betriebsverhalten hydraulischer Lenkeinrichtungen kann auch dazu führen, dass die Bedienperson den Lenkwinkelgeber ständig nachführen muss, um die gewünschte Fahrtrichtung der Arbeitsmaschine bei einer längeren Geradeausfahrt beizubehalten, wodurch sich für die Bedienperson derartiger Arbeitsmaschinen eine hohe Konzentrationsbedarf ergibt, der zu einem schnellen Ermüden der Bedienperson führt.

Um die Stellung des Lenkwinkelgebers mit der Stellung des Lenkantriebs bei hydraulischen Lenkeinrichtungen zu synchronisieren und somit eine Synchronisation zwischen der Stellung des Lenkwinkelgebers und der Stellung des Lenkantriebs zu ermöglichen, sind Korrektureinrichtungen bekannt. Eine gattungsgemäße Lenkeinrichtung mit einer Korrektureinrichtung, die in einem als Geradeausfahrtstellung des Lenkantriebs ausgebildeten Referenzbereich eine Synchronisation der Stellung des Lenkwinkelgebers mit der Stellung des Lenkantriebs ermöglicht, ist aus der EP 0 872 405 A2 bekannt. Bei dieser Korrektureinrichtungen wird mittels eines als Encoder ausgebildeten Absolutsensors, der an dem Lenkwinkelgeber angeordnet ist, die Stellung des Lenkwinkelgebers und somit der Sollwert für den Lenkeinschlag erfasst. Der Istwert des Lenkeinschlags wird mittels eines an dem Lenkantrieb, beispielsweise dem Lenkzylinder, angeordneten als Potentiometer ausgebildeten Absolutsensors erfasst. Diese Absolutsensoren stehen mit einer elektronischen Regeleinrichtung in Wirkverbindung, in der ein ständiger und kontinuierlicher Soll-IstWert-Vergleich des Lenkeinschlags durchgeführt wird, um bei einer Abweichung zwischen der Stellung des Lenkantriebs und der Stellung des Lenkwinkelgebers eine Synchronisation des Lenkantriebs mit der Stellung des Lenkwinkelgebers herzustellen. Derartige Absolutsensoren, beispielsweise Potentiometer, Encoder oder Proportionalsensoren, die die Stellung des Lenkwinkelgebers und die Stellung des Lenkantriebs erfassen und eine zugehörige elektronischen Regeleinrichtung weisen jedoch hohe Herstellkosten auf, wodurch sich für die hydraulische Lenkeinrichtung mit einer Korrektureinrichtung ein hoher Herstellaufwand ergibt.

Der vorliegenden Erfindung liegt die Aufgabe zugrunde, eine hydraulische Lenkeinrichtung mit einer Korrektureinrichtung zur Verfügung zu stellen, die eine Synchronisation zwischen der Stellung des Lenkantriebs und der Stellung des Lenkwinkelgebers mit geringem Bauaufwand und geringem Herstellaufwand ermöglicht.

Diese Aufgabe wird erfindungsgemäß dadurch gelöst, dass die Korrektureinrichtung eine mit dem Lenkantrieb in Wirkverbindung stehende Schalteinrichtung aufweist mittels der eine Geradeausfahrstellung und eine Nichtgeradeausfahrstellung des Lenkantriebs erfassbar ist. Erfindungsgemäß ist somit ein Abgleich zwischen der Stellung des Lenkwinkelgebers und der Stellung des Lenkantriebs auf einen von der Geradeausfahrtstellung des Lenkantriebs gebildeten Referenzbereich und somit eine Referenzstellung begrenzt und erfolgt lediglich in der Referenzstellung oder im Referenzbereich, sofern eine entsprechende Abweichung zwischen der Stellung des Lenkwinkelgebers und der Stellung des Lenkantriebs vorliegt. Da erfindungsgemäß lediglich die Geradeausfahrtstellung als Referenzstellung des Lenkantriebs erfasst werden muss, um die Lenkeinrichtung zu synchronisieren, und die Synchronisation auf die Geradeausfahrstellung beschränkt ist, kann zur Erfassung der Stellung des Lenkantriebs eine einfach aufgebaute und kostengünstige Schalteinrichtung, beispielsweise ein Positionssensor, verwendet werden, die gegenüber einem Absolutsensor bei Lenkeinrichtungen des Standes der Technik geringe Herstellkosten aufweist, wodurch die Lenkeinrichtung mit der Korrektureinrichtung einen geringen Bauaufwand und geringen Herstellkosten aufweist und keine elektronische Regeleinrichtung erfordert. Bei als Baumaschinen oder Flurförderzeugen ausgebildeten Arbeitsmaschinen tritt die Geradeausfahrstellung im Betrieb mit großer Häufigkeit auf. Durch die intermittierende Synchronisation der Lenkeinrichtung in der mit großer Häufigkeit im Betrieb der Arbeitsmaschine auftretenden Geradeausfahrstellung kann somit auf einfache Weise sichergestellt werden, dass eine Synchronisation zwischen der Stellung des Lenkwinkelgebers und der Stellung des Lenkantriebs im Betrieb der Arbeitsmaschine erzielt wird. Die Synchronisation der Lenkeinrichtung kann hierbei in einer Geradeausfahrphase erfolgen oder sich über mehrere Geradeausfahrphasen der Arbeitsmaschine erstrecken.

Eine Synchronisation der Stellung des Lenkwinkelgebers auf die Stellung des Lenkantriebs kann durch eine Zufuhr von Druckmittel zu dem Lenkantrieb, durch einen Ablass von Druckmittel aus dem Lenkantrieb oder durch einen Kurzschlussverbindung am Lenkantrieb erzielt werden.

Durch die Synchronisation der Lenkeinrichtung lediglich in der Geradeausfahrstellung kann zur Erfassung der Stellung des Lenkwinkelgebers gemäß einer bevorzugten Ausführungsform der Erfindung eine Umschalteinrichtung vorgesehen werden mittels der eine Geradeausfahrstellung und zumindest eine Nichtgeradeausfahrstellung des Lenkwinkelgebers erfassbar ist. Eine derartige Umschalteinrichtung weist gegenüber Absolutsensoren bei Lenkeinrichtungen des Standes der Technik einen einfachen Aufbau mit geringen Herstellkosten auf.

Die Umschalteinrichtung kann zwei Stellungen aufweisen. Besondere Vorteile ergeben sich, wenn die Umschalteinrichtung eine Geradeausfahrstellung, eine erste Nichtgeradeausfahrstellung und eine zweite Nichtgeradeausfahrstellung aufweist, wobei in der ersten Nichtgeradeausfahrstellungen und in der zweiten Nichtgeradeausfahrstellung die Stellung des Lenkwinkelgebers bezüglich der Geradeausfahrstellung erfassbar ist. Mit einer derartigen Umschalteinrichtung kann die Stellung des Lenkrades relativ zur Geradeausfahrstellung erfasst werden, beispielsweise die Stellung eines als Lenkrad ausgebildeten Lenkwinkelgebers in Drehrichtung links bzw. rechts von der Geradeausfahrstellung, wodurch Abweichungen des Lenkwinkelgebers von der Geradeausfahrstellung in beiden Richtungen ermittelt werden können.

Sofern gemäß einer Ausgestaltung der Erfindung der Lenkzylinder als doppeltwirkender Zylinder ausgebildet ist, dessen erster Steuerdruckraum mittels einer ersten Steuerleitung und dessen zweiter Steuerdruckraum mittels einer zweiten Steuerleitung mit dem Lenkventil in Verbindung steht, ergeben sich besondere Vorteile, wenn zur Synchronisation der Stellung des Lenkwinkelgebers mit der Stellung des Lenkantriebs der erste bzw. der zweite Steuerdruckraum mit dem Behälter in Verbindung bringbar ist. Hierdurch kann auf einfache Weise zur Synchronisation der Lenkeinrichtung Druckmittel zum Behälter abgeführt werden.

Zur Verbindung des entsprechenden Steuerdruckraums des Lenkzylinders mit dem Behälter kann gemäß einer bevorzugten Weiterbildung der Erfindung ein Absperrventil vorgesehen werden.

Der über das Lenkventil mit der Druckmittelquelle in Verbindung stehende Steuerdruckraum kann auf einfache Weise zur Synchronisation des Lenkantriebs mit dem Behälter verbunden werden, wenn das Absperrventil in einer die Steuerleitung mit dem Behälter verbindenden Verbindungsleitung angeordnet ist.

Das Absperrventil ist hierbei zweckmäßigerweise als elektrisch betätigbares, aufsteuerbares Absperrventil ausgebildet.

Eine Synchronisation der Lenkeinrichtung wird hierbei auf einfache Weise erzielt, wenn mittels der Korrektureinrichtung bei in der Geradeausfahrstellung befindlicher Schalteinrichtung und bei in der Nichtgeradeausfahrstellung befindlicher Umschalteinrichtung durch eine Beaufschlagung des Absperrventils in eine Durchflussstellung eine Verbindung der Steuerleitung, die über das Lenkventil mit der Druckmittelquelle in Verbindung steht, mit dem Behälter herstellbar ist. Hierdurch kann auf einfache Weise während der Geradeausfahrphasen der Arbeitsmaschine eine Synchronisation der Stellung des Lenkwinkelgebers mit der Stellung des Lenkantriebs durch eine Verbindung des über das Lenkventil dem Lenkantrieb zugeführten Druckmittels zum Behälter erzielt werden.

Die Umschalteinrichtung kann gemäß einer Ausführungsform der Erfindung als elektrischer Schalter, insbesondere elektrischer Wahlschalter, ausgebildet ist. Mit einem derartigen Schalter kann auf einfache Weise eine Geradeausfahrstellung, eine erste und eine zweite Nichtgeradeausfahrstellung des Lenkwinkelgebers ermittelt werden.

Ein einfacher Aufbau für eine Lenkeinrichtung mit einer Korrektureinrichtung ergibt sich hierbei, wenn der Schalter eine Geradeausfahrstellung, einer erste und eine zweite Nichtgeradeausfahrstellung aufweist und eingangsseitig mit einer elektrischen Steuerleitung in Verbindung steht, die zu einer elektrischen Energiequelle geführt ist, wobei der Schalter ausgangsseitig an eine erste elektrische Steuerleitung, die zu einem in der ersten Verbindungsleitung, die von der ersten Steuerleitung zu dem Behälter geführt ist, angeordneten elektrisch betätigbaren Absperrventil geführt ist, und an eine zweite elektrische Steuerleitung angeschlossen ist, die zu einem in der zweiten Verbindungsleitung, die von der zweiten Steuerleitung zu dem Behälter geführt ist, angeordneten elektrisch betätigbaren Absperrventil geführt ist. Mit einem derartigen elektrischen Schalter kann auf einfache Weise das entsprechende Absperrventil angesteuert werden.

Sofern in der ersten Nichtgeradeausfahrstellung des Lenkwinkelgebers die erste Steuerleitung über das Lenkventil mit der Druckmittelquelle und in der zweiten Nichtgeradeausfahrstellung des Lenkwinkelgebers die zweite Steuerleitung über das Lenkventil mit der Druckmittelquelle Verbindung steht, wobei der Schalter in der ersten Nichtgeradeausfahrstellung die Verbindung der elektrischen Steuerleitung zur ersten elektrischen Steuerleitung und in der zweiten Nichtgeradeausfahrstellung die Verbindung der elektrischen Steuerleitung zur zweiten elektrischen Steuerleitung herstellt, kann auf einfache Weise erzielt werden, dass zur Synchronisation der Lenkeinrichtung die entsprechende über das Lenkventil mit der Druckmittelquelle in Verbindung stehende Steuerleitung zum Behälter entlastet wird.

Ein einfacher Aufbau der Korrektureinrichtung ergibt sich weiterhin, wenn in der elektrischen Steuerleitung die Schalteinrichtung angeordnet ist, die als elektrischer Schalter, insbesondere Schließer, ausgebildet ist, wobei der Schalter bei in der Geradeausfahrstellung befindlichem Lenkantrieb in eine Schließstellung beaufschlagt ist. Die Korrektureinrichtung weist somit lediglich zwei einfache elektrische Schalter auf, um über elektrisch betätigbare Absperrventile eine Synchronisation der Lenkeinrichtung zu erzielen.

Gemäß einer weiteren Ausführungsform der Erfindung ist die Umschalteinrichtung als hydraulisches Ventil, insbesondere Drehschieberventil, ausgebildet. Mit einem insbesondere als Drehschieberventil ausgebildeten hydraulischen Ventil, das mit einem als Lenkrad ausgebildeten Lenkwinkelgeber ausgebildeten Lenkantrieb trieblich verbunden ist, kann ebenfalls mit geringem Aufwand eine Geradeausfahrstellung, eine erste sowie eine zweite Nichtgeradeausfahrstellung des Lenkwinkelgebers ermittelt werden.

In einer vorteilhaften Ausgestaltungsform der Erfindung ist vorgesehen, dass das Ventil mit dem Lenkwinkelgeber in Wirkverbindung steht und an das Lenkventil angebaut bzw. in das Lenkventil integriert ist. Bei einer Zuordnung des Ventils zu dem Lenkwinkelgeber kann das Ventil mit geringem zusätzlichen Bauaufwand an dem Lenkventil angebaut oder in das Lenkventil integriert werden. Sofern das Lenkventil als Drehschieberventil ausgebildet ist, kann das Ventil auf einfache Weise durch zusätzliche Steuerkanten an dem Lenkventil gebildet und somit in das Lenkventil integriert werden, wodurch sich ein geringer zusätzlicher Bauaufwand für das Ventil ergibt.

Besondere Vorteile ergeben sich, wenn das Ventil als Proportionalventil ausgebildet ist. Mit einem Proportionalventil können in Abhängigkeit von der Abweichung der Stellung des Lenkwinkelgebers von dem als Geradeausfahrstellung ausgebildeten Referenzbereich sich vergrößemde Steuerquerschnitte erzielt werden und somit mit zunehmender Abweichung der Stellung des Lenkwinkelgebers von der Referenzstellung eine sich vergrößernde Abgleichgeschwindigkeit erzielt werden.

Das hydraulisches Ventil weist hierbei zweckmäßigerweise eine Geradeausfahrstellung, eine erste Nichtgeradeausfahrstellung und eine zweite Nichtgeradeausfahrstellung auf und steht eingangsseitig mit den Steuerleitungen sowie ausgangsseitig mit einer zu dem Behälter geführten Verbindungsleitung in Verbindung, wobei in der Verbindungsleitung ein Absperrventil angeordnet ist.

Sofern in der ersten Nichtgeradeausfahrstellung des Ventils, wobei die erste Steuerleitung über das Lenkventil mit der Druckmittelquelle in Verbindung steht, die erste Steuerleitung an die mit dem Behälter in Verbindung stehende Verbindungsleitung und in der zweiten Nichtgeradeausfahrstellung des Ventils, wobei die zweite Steuerleitung über das Lenkventil mit der Druckmittelquelle in Verbindung steht, die zweite Steuerleitung an die Verbindungsleitung angeschlossen ist, kann auf einfache Weise sichergestellt werden, dass zur Synchronisation die mit der Druckmittelquelle in Verbindung stehende Steuerleitung zum Behälter entlastet wird.

Sofern hierbei das Absperrventil elektrisch betätigbar ist, ergibt sich eine einfache Steuerung des Absperrventils, wenn die Schalteinrichtung als elektrischer Schalter, insbesondere Schließer, ausgebildet ist, der mit dem Lenkantrieb in Wirkverbindung steht und eingangsseitig an eine elektrische Energiequelle angeschlossen ist, wobei der Schalter ausgangsseitig an eine elektrische Steuerleitung angeschlossen ist, die zu dem in der Verbindungsleitung angeordneten elektrisch betätigbaren Absperrventil geführt ist, wobei der Schalter bei in der Geradeausfahrstellung befindlichem Lenkantrieb in eine Schließstellung beaufschlagt ist. Zur Synchronisation der Lenkeinrichtung ist somit lediglich ein mit dem Lenkwinkelgeber in Wirkverbindung stehendes Ventil, insbesondere Drehschieberventil, und ein in Abhängigkeit von der Stellung des Lenkantriebs betätigbares Absperrventil erforderlich.

Gemäß einer bevorzugten baulichen Ausgestaltungsform der Erfindung ist das Absperrventil am Lenkventil angeordnet oder in das Lenkventil integriert. Hierdurch kann eine einfache Verrohrung des Absperrventils bzw. der beiden Absperrventile erzielt werden, wenn weiterhin die Verbindungsleitungen im Lenkventil ausgebildet sind. Die Verbindungsleitungen können hierbei als einfache Kanäle im Lenkventil ausgebildet, die von den Steuerkanälen zu dem Behälterkanal des Lenkventils geführt sind, und das Absperrventil bzw. die beiden Absperrventile auf einfache Weise an das Lenkventil angeflanscht werden.

Besondere Vorteile ergeben sich bei der Verwendung einer erfindungsgemäßen Lenkeinrichtung in einem Flurförderzeug, insbesondere Gabelstapler. Mit der erfindungsgemäßen Lenkeinrichtung kann bei Flurförderzeugen mit geringen Zusatzkosten eine Synchronisation der Lenkeinrichtung erzielt werden. Bei Flurförderzeugen, die oft in engen räumlichen Umgebungen betrieben werden, kann hierdurch mit einem geringen zusätzlichen Bauaufwand und geringen zusätzlichen Herstellkosten für die Korrektureinrichtung ein sichererer Betrieb ermöglicht werden, da für die Bedienperson eine eindeutige und beständige Übereinstimmung der Geradeausfahrstellung des Lenkwinkelgebers mit der Geradeausfahrstellung des Lenkantriebs sichergestellt wird.

Weitere Vorteile und Einzelheiten der Erfindung werden anhand der in den schematischen Figuren dargestellten Ausführungsbeispiele näher erläutert. Hierbei zeigt
- Figur 1: eine erste Ausführungsform einer erfindungsgemäßen Lenkeinrichtung und
- Figur 2: eine zweite Ausführungsform einer erfindungsgemäßen Lenkeinrichtung.

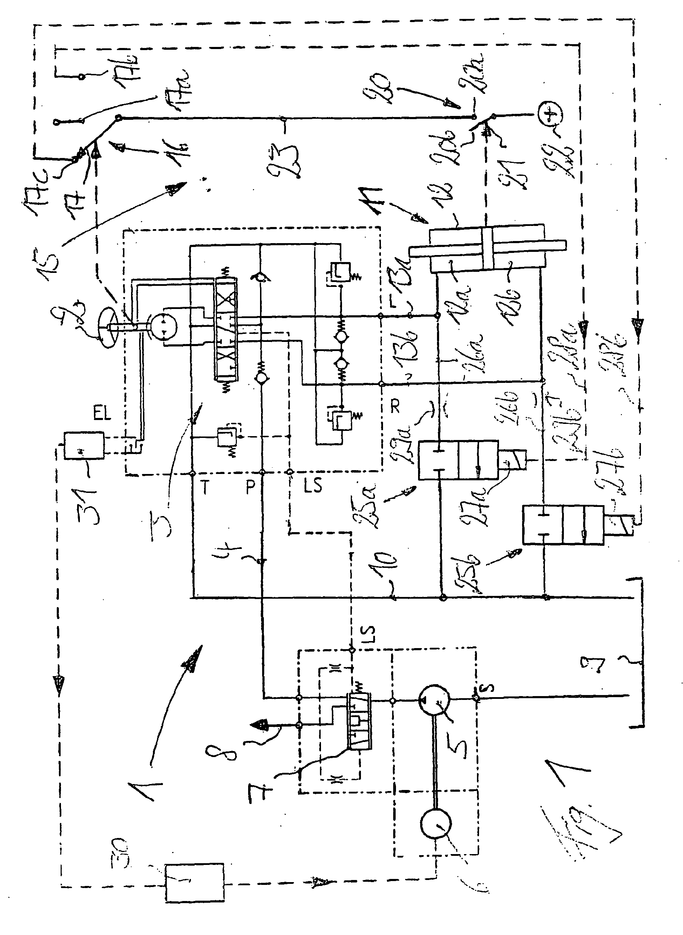

In der Figur 1 ist eine erste Ausführungsform einer hydraulischen Lenkeinrichtung 1 einer als Flurförderzeug ausgebildeten Arbeitsmaschine gezeigt. Die Lenkeinrichtung 1 weist einen Lenkwinkelgeber 2 auf, beispielsweise ein Lenkrad, der mit einem Lenkventil 3 in Wirkverbindung steht. Das Lenkventil 3 ist strichpunktiert umrandet dargestellt und als übliches Lenkorbitel ausgebildet. Das Lenkventil 3 steht mit einer Förderleitung 4 einer als Pumpe ausgebildeten Druckmittelquelle 5 in Verbindung, die mit einer Antriebsmaschine 6, beispielsweise einem Elektromotor in trieblicher Verbindung steht. In der Förderleitung 4 ist ein Prioritätsventil 7 angeordnet, das ausgangsseitig an eine zu einer Arbeitshydraulik, beispielsweise einem Hubantrieb, einem Neigeantrieb und einem Zusatzantrieb des Flurförderzeugs, geführten Förderleitung 8 angeschlossen ist und die bevorzugte Versorgung der Lenkeinrichtung 1 sicherstellt. Zur Steuerung der Antriebsmaschine 6 ist eine Steuereinrichtung 30 vorgesehen, die eingangsseitig mit einem Schalter 31 in Verbindung steht, der mit dem Lenkwinkelgeber 2 in Wirkverbindung steht. Bei einer von dem Schalter 31 erfaßten Betätigung des Lenkwinkelgebers 2 wird durch die Steuereinrichtung 30 die Antriebsmaschine 6 angesteuert, wodurch von der Druckmittelquelle 5 Druckmittel in die Förderleitung 4 gefördert wird.

Das Lenkventil 3 ist weiterhin an eine zu einem Behälter 9 geführte Behälterleitung10 angeschlossen. Die Lenkeinrichtung 1 weist weiterhin einen Lenkantrieb 11 auf, der beispielsweise als doppeltwirkender Lenkzylinder 12 ausgebildet ist, der an einer Lenkachse angeordnet ist und mit den gelenkten Rädern auf nicht mehr dargestellte Weise in Wirkverbindung steht. Der Lenkzylinder 12 weist einen ersten Steuerdruckraum 12a und einen zweiten Steuerdruckraum 12b auf, die mittels Steuerleitungen 13a bzw. 13b mit dem Lenkventil 3 in Verbindung stehen.

Erfindungsgemäß ist die Lenkeinrichtung 1 mit einer Korrektureinrichtung 15 vorgesehen. Die Korrektureinrichtung 15 weist eine Umschalteinrichtung 16 auf, die in dem dargestellten Ausführungsbeispiel mit dem Lenkwinkelgeber 2 zur Erfassung der Stellung des Lenkwinkelgebers 2 in Wirkverbindung steht. Die Umschalteinrichtung 16 ist gemäß der Figur 1 als elektrischer Schalter 17, insbesondere Wahlschalter, ausgebildet. Der Schalter 17 weist hierbei eine Geradeausfahrstellung 17a, eine erste Nichtgeradeausfahrstellung 17b und eine zweite Nichtgeradeausfahrstellung 17c auf.

Die Korrektureinrichtung 15 umfasst weiterhin erfindungsgemäß eine Schalteinrichtung 20, die mit dem Lenkantrieb 11 zur Erfassung der Stellung des Lenkantriebs 11 in Wirkverbindung steht. Die Schalteinrichtung 20 ist hierbei als an dem Lenkzylinder 12 angeordneter elektrischer Schalter 21, insbesondere Schließer, ausgebildet. Die Schalteinrichtung 20 steht eingangsseitig mit einer elektrischen Energiequelle 22 in Verbindung. Ausgangsseitig ist die Schalteinrichtung 20 an eine elektrische Steuerleitung 23 angeschlossen, die eingangsseitig mit der Umschalteinrichtung 16 in Verbindung steht.

Die Korrektureinrichtung 15 umfasst weiterhin Absperrventile 25a bzw. 25b, die in Verbindungsleitungen 26a bzw. 26b angeordnet sind, die von den Steuerleitungen 13a bzw. 13b zu der Behälterleitung10 geführt sind. Die Absperrventile 25a, 25b sind hierbei elektrisch betätigbar und weisen jeweils eine als Elektromagnet, beispielsweise Schaltmagnet, ausgebildete Betätigungseinrichtung 27a, 27b auf. Die Betätigungseinrichtung 27a steht mit einer elektrischen Steuerleitung 28a in Verbindung, die an den Ausgang der ersten Nichtgeradeausfahrstellung 17b der Umschalteinrichtung 16 angeschlossen ist. Entsprechend steht die Betätigungseinrichtung 27b mit einer elektrischen Steuerleitung 28b in Verbindung, die an den Ausgang der zweiten Nichtgeradeausfahrstellung 17c der Umschalteinrichtung 16 angeschlossen ist.

Die Absperrventile 25a, 25b befinden sich normalerweise in einer Sperrstellung und können bei einer Ansteuerung der Betätigungseinrichtungen 27a, 27b in eine Durchflussstellung aufgesteuert werden. In den Verbindungsleitungen 26a, 26b können hierbei Drosseleinrichtungen 29a, 29b angeordnet sein.

Die als Schalter 21 ausgebildete Schalteinrichtung 20 ist hierbei derart ausgestaltet und kann mit einer gewissen Hysterese versehen sein, dass im Referenzbereich, d.h. im Bereich der Geradeausfahrstellung 20a, des Lenkantriebs 11 und somit des Lenkzylinders 12 die Schalteinrichtung 20 geschlossen ist und somit die Verbindung der elektrischen Energiequelle 22 zu der Umschalteinrichtung 16 hergestellt ist. Die Schließstellung der Schalteinrichtung 20 stellt somit eine Geradeausfahrstellung 20a dar, die Offenstellung der Schalteinrichtung 20 bildet eine Nichtgeradeausfahrstellung 20b.

Die als Wahlschalter 17 ausgebildete Umschalteinrichtung 16 erfasst die Stellung des Lenkwinkelgebers 2, wobei sich die Umschalteinrichtung 16 in der Geradeausfahrstellung 17a befindet, wenn sich der Lenkwinkelgeber 2 in einer Stellung für die Geradeausfahrt befindet. Ist der Lenkwinkelgeber 2 in die erste Nichtgeradeausfahrstellung 17b ausgelenkt, befindet sich beispielsweise der als Lenkrad ausgebildete Lenkwinkelgeber 2 in Drehrichtung rechts von der Geradeausfahrstellung. In der ersten Nichtgeradeausfahrstellung 17b des Lenkwinkelgebers 2 ist das Lenkventil 3 hierbei nach in der Figur 1 rechts ausgelenkt, wodurch die Förderleitung 4 mit der Steuerleitung 13a in Verbindung steht. Entsprechend befindet sich die Umschalteinrichtung 16 in der zweiten Nichtgeradeausfahrstellung 17c, wenn der als Lenkrad ausgebildete Lenkwinkelgeber 2 in Drehrichtung links von der Geradeausfahrstellung ausgelenkt ist. In der zweiten Nichtgeradeausfahrstellung 17c des Lenkwinkelgebers 2 ist das Lenkventil 3 in Richtung der in der Figur 1 links dargestellten Schaltstellung ausgelenkt, in der die Förderleitung 4 mit der Steuerleitung 13b in Verbindung steht

Es ist selbstverständlich eine Anordnung möglich, bei der die als Schalteinrichtung 20 ausgebildete Positionserfassungseinrichtung mit dem Lenkwinkelgeber 2 und die Umschalteinrichtung 16 mit dem Lenkantrieb 11 in Wirkverbindung stehen.

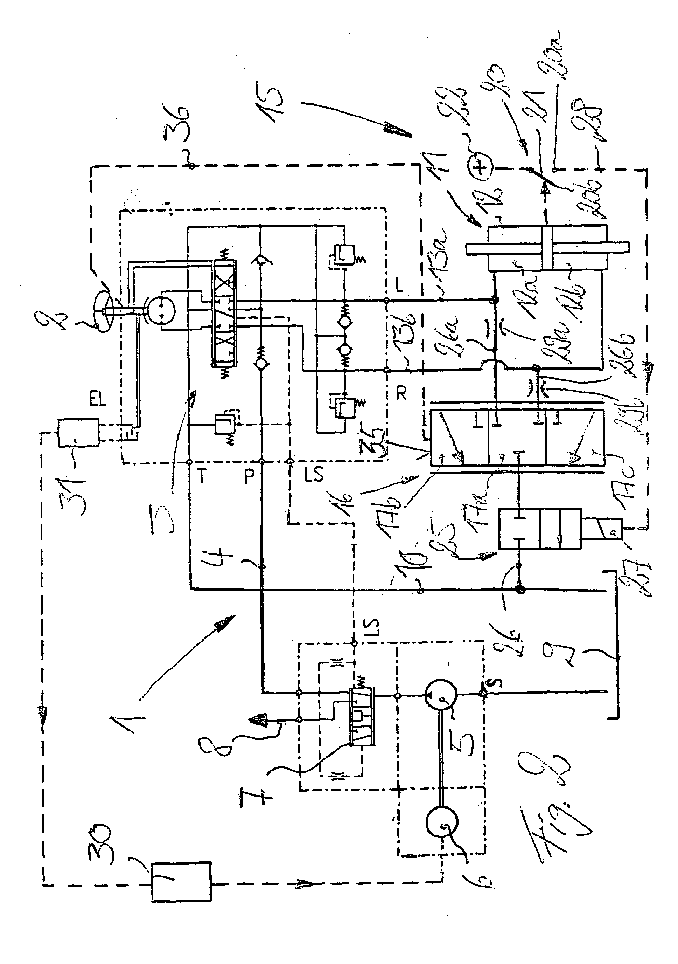

Die Figur 2 zeigt eine zweite Ausführungsform einer erfindungsgemäßen Lenkeinrichtung 1, wobei gleiche Bauteile mit gleichen Bezugszeichen versehen sind.

Die Umschalteinrichtung 16 ist hierbei als hydraulisches Ventil 35, insbesondere Drehschieberventil, ausgebildet, das mit dem Lenkwinkelgeber 2, beispielsweise über eine mechanische Koppeleinrichtung 36, drehfest verbunden ist. Das Ventil 35 kann hierbei bei einem als Drehschieberventil ausgebildeten Lenkventil 3 an das Lenkventil 3 angebaut oder in das Lenkventil 3 integriert werden. Das Ventil 35 steht eingangsseitig mit den von den Steuerleitungen 13a, 13b abzweigenden Verbindungsleitungen 26a, 26b in Verbindung und ist ausgangsseitig an eine

Verbindungsleitung 26 angeschlossen, die zu der Behälterleitung10 geführt ist. In der Verbindungsleitung 26 ist ein Absperrventil 25 angeordnet. Das Ventil 35 weist eine Geradeausfahrstellung 17a auf, in der die Verbindung der Verbindungsleitungen 26a, 26b zur Verbindungsleitung 26 gesperrt sind. In einer ersten Nichtgeradeausfahrstellung 17b des Ventils 35 steht die Verbindungsleitung 26a mit der Verbindungsleitung 26 in Verbindung und ist somit bei angesteuertem Absperrventil 27 zum Behälter 9 entlastet. In der zweiten Nichtgeradeausfahrstellung 17c ist die Verbindungsleitung 26b an die mit dem Behälter 9 in Verbindung stehende Verbindungsleitung 26 angeschlossen. Weiterhin ist eine als Schließer 21 ausgebildete Schalteinrichtung 20 vorgesehen, die eingangsseitig an die elektrische Energiequelle 22 angeschlossen ist ausgangsseitig mit einer elektrischen Steuerleitung 28 in Verbindung steht, die zu der als Schaltmagnet ausgebildeten Betätigungseinrichtung 27 des Absperrventils 25 geführt ist. Die Schließstellung der Schalteinrichtung 20 bildet wiederum mit einer gewissen Hysterese eine Geradeausfahrstellung 20a als Referenzbereich, die Offenstellung der Schalteinrichtung 20 bildet eine Nichtgeradeausfahrstellung 20b des Lenkantriebs 11.

Bei einer Ausführungsform gemäß der Figur 2 ist ebenfalls möglich, dass das Ventil 35 mit dem Lenkantrieb 11 und die Positionserfassungseinrichtung, d.h. die Schalteinrichtung 20, mit dem Lenkwinkelgeber in Wirkverbindung stehen.

Bei der erfindungsgemäßen Lenkeinrichtung 1 mit der Korrektureinrichtung 15 erfolgt die Synchronisation wie folgt:

Befindet sich der Lenkantrieb 11 und somit der Lenkzylinder 12 im Bereich der Geradeausfahrstellung 20a, ist die als Schließer 21 ausgebildete Schalteinrichtung 20 in der Schließstellung, wodurch gemäß der Figur 1 die elektrische Energiequelle 22 mit der Umschalteinrichtung 16 in Verbindung steht. Bei der Ausführungsform gemäß der Figur 2 ist in der Schließstellung des Schalters 21 das Absperrventil 27 in die Durchflussstellung aufgesteuert.

Befindet sich hierbei der Lenkwinkelgeber 2 und somit die Umschalteinrichtung 16 im Bereich der Geradeausfahrstellung 17a erfolgt gemäß Figur 1 keine Verbindung der Steuerleitung 23 mit einer der Steuerleitungen 28a bzw. 28b oder gemäß der Figur 2 keine Verbindung der Verbindungsleitungen 26a bzw. 26b mit der Verbindungsleitung 26.

Weist aufgrund von Leckagen am Lenkventil 3 bzw. am Lenkantrieb 11 der Lenkwinkelgeber 2 eine von der Geradeausfahrstellung 17a abweichenden Stellung auf, ist die Umschalteinrichtung 16 je nach Stellung des Lenkwinkelgebers 2 in Drehrichtung rechts oder links von der Geradeausfahrstellung in die erste Nichtgeradeausfahrstellung 17b bzw. die zweite Nichtgeradeausfahrstellung 17c beaufschlagt.

Befindet sich bei der Ausführungsform der Figur 1 der Lenkantrieb 11 in der Geradeausfahrstellung 20a und der Lenkwinkelgeber 2 aufgrund von Leckagen links von der Geradeausfahrstellung 17a ist über den geschlossenen Schalter 21 und die in die zweite Nichtgeradeausfahrstellung 17c ausgelenkten Umschalteinrichtung 16 das Absperrventil 25b durch eine Ansteuerung der Betätigungseinrichtung 27b in die Duchflussstellung beaufschlagt. Über den links von der Geradeausfahrstellung 17a befindlichen Lenkwinkelgeber 2 ist das Lenkventil 3 in Richtung der in der Figur 1 links dargestellten Schaltstellung beaufschlagt, wobei die Förderleitung 4 mit der Steuerleitung 13b in Verbindung steht. Die über das Lenkventil 3 mit der Förderleitung 4 in Verbindung stehende Steuerleitung 13b wird somit über das in die Durchflussstellung beaufschlagte Absperrventil 25b mit dem Behälter 9 verbunden. Die Bedienperson kann somit den Lenkwinkelgeber 2 in die Geradeausfahrstellung 17a betätigen, wobei der Lenkzylinder 12 in der Geradeausfahrstellung 20a verbleibt, und somit eine Synchronisation zwischen der Stellung des Lenkantriebs 11 und der Stellung des Lenkwinkelgebers 2 auf die als Referenzstellung ausgebildete Geradeausfahrstellung 17a, 20a erzielen.

Ist der Lenkwinkelgeber 2 bei in Geradeausfahrstellung 20a befindlichem Lenkantrieb 11 leckagebedingt in Drehrichtung rechts von der Geradeausfahrstellung 17a wird über den geschlossenen Schalter 21 und die in der ersten Nichtgeradeausfahrstellung 17b befindliche Umschalteinrichtung 16 das Absperrventil 27a in die Durchflussstellung aufgesteuert. Das Lenkventil 3 ist hierbei in Richtung der in der Figur 1 rechten Schaltstellung ausgelenkt, wodurch die mit der Förderleitung 4 in Verbindung stehende Steuerleitung 13a über das aufgesteurte Absperrventil 27a an den Behälter 9 angeschlossen ist. Die Bedienperson kann somit den Lenkwinkelgeber 2 in Richtung der Geradeausfahrstellung 17a beaufschlagen, wobei der Lenkantrieb 11 in der Geradeausfahrstellung 20a verbleibt, und somit eine synchrone Stellung zwischen dem Lenkwinkelgeber 2 und dem Lenkzylinder 12 erzielen.

Befindet sich bei der Ausführungsform gemäß der Figur 2 der Lenkantrieb 11 in der Geradeausfahrstellung 20a und der Lenkwinkelgeber 2 aufgrund von Leckagen links von der Geradeausfahrstellung 17a, ist über den geschlossenen Schalter 21 das Absperrventil 25 durch eine Ansteuerung der Betätigungseinrichtung 27 in die Duchflussstellung beaufschlagt und das Ventil 35 in Richtung der zweiten Nichtgeradeausfahrstellung 17c ausgelenkt. Über den links von der Geradeausfahrstellung 17a befindlichen Lenkwinkelgeber 2 ist das Lenkventil 3 in Richtung der in der Figur 2 links dargestellten Schaltstellung beaufschlagt, wobei die Förderleitung 4 mit der Steuerleitung 13b in Verbindung steht. Die mit der Förderleitung 4 in Verbindung stehende Steuerleitung 13b ist somit über das in die zweite Nichtgeradeausfahrstellung 17c beaufschlagte Ventil 35 und das aufgesteuerte Absperrventil 25 zum Behälter 9 entlastet. Die Bedienperson kann somit den Lenkwinkelgeber 2 in die Geradeausfahrstellung 17a beaufschlagen, wobei der Lenkantrieb 11 in die Geradeausfahrstellung 20a verbleibt und somit eine Synchronisation zwischen der Stellung des Lenkzylinders 12 und der Stellung des Lenkwinkelgebers 2 auf die Geradeausfahrstellung 17a, 20a hergestellt wird.

Ist der Lenkwinkelgeber 2 bei in Geradeausfahrstellung befindlichem Lenkantrieb 11 leckagebedingt rechts von der Geradeausfahrstellung 17a wird über den geschlossenen Schalter 21 das Absperrventil 25 aufgesteuert, wobei das Ventil 35 in Richtung der ersten Nichtgeradeausfahrstellung 17b beaufschlagt ist. Das Lenkventil 3 ist hierbei in Richtung der in der Figur 1 rechts dargestellten Schaltstellung ausgelenkt, wodurch Druckmittel von der Förderleitung 4 in die Steuerleitung 13a strömt. Die Steuerleitung 13a ist über das in die erste Nichtgeradeausfahrstellung 17b beaufschlagte Ventil 35 und das aufgesteuerte Absperrventil 25 zum Behälter 9 entlastet. Die Bedienperson kann somit den Lenkwinkelgeber 2 in Richtung der Geradeausfahrstellung 17a beaufschlagen und somit in der Geradeausfahrstellung 20a des Lenkantriebs 11 und eine synchrone Stellung zwischen dem Lenkwinkelgeber 2 und dem Lenkantrieb 11 herstellen.

Das Ventil 35 kann hierbei als Proportionalventil mit sich bei zunehmender Auslenkung vergrößernden Steuerquerschnitten ausgebildet sein. Hierdurch werden in Abhängigkeit von der Abweichung der Stellung des Lenkwinkelgebers 3 von der Geradeausfahrstellung 17a und somit in Abhängigkeit von der Auslenkung des Ventils 35 zunehmende Volumenströme ermöglicht, wodurch bei einer hoher Abweichung zwischen der Stellung des Lenkwinkelgebers 2 und der Stellung des Lenkantriebs 11 eine hohe Abgleichgeschwindigkeit und somit eine schnelle Synchronisation und bei geringen Abweichungen eine geringe Abgleichgeschwindigkeit mit einer feinfühligen Synchronisation ermöglicht wird.

Durch den im normalen Fahrbetrieb intermittierenden Abgleich der Stellung des Lenkwinkelgebers 2 und der Stellung des Lenkantriebs 11 in der Geradeausfahrstellung 20a als Referenzbereich der Arbeitsmaschine kann hierbei eine einfache und kostengünstige Schalteinrichtung 20, sowie eine einfache und kostengünstige Umschalteinrichtungen 16 verwendet werden, wodurch sich für die Korrektureinrichtung 15 ein geringer Herstellaufwand und Bauaufwand ergibt.

## Patentansprüche

1. Hydraulische Lenkeinrichtung (1) mit einem Lenkwinkelgeber (2), der mit einem Lenkventil (3) in Verbindung steht, das in Abhängigkeit von der Betätigung des Lenkwinkelgebers (2) die Verbindung eines insbesondere als Lenkzylinder (12) ausgebildeten Lenkantriebs (11) mit einer Druckmittelquelle (5) und einem Behälter (9) steuert, und einer Korrektureinrichtung (15), die eine Synchronisation zwischen der Stellung des Lenkwinkelgebers (2) und der Stellung des Lenkantriebs (11) ermöglicht, wobei die Korrektureinhchtung (15) bei in einem Referenzbereich, der im Bereich der Geradeausfahrstellung des Lenkantriebs ausgebildet ist, befindlichem Lenkantrieb (11) und von dem Referenzbereich abweichender Stellung des Lenkwinkelgebers (2) eine Synchronisation der Stellung des Lenkwinkelgebers (2) mit der Stellung des Lenkantriebs (11) ermöglicht, **dadurch gekennzeichnet, dass** die Korrektureinrichtung (15) eine mit dem Lenkantrieb (11) in Wirkverbindung stehende Schalteinrichtung (20) aufweist mittels der die Geradeausfahrstellung (20a) und eine Nichtgeradeausfahrstellung (20b) des Lenkantriebs (11) erfassbar ist.

2. Hydraulische Lenkeinrichtung nach Anspruch 1, **dadurch gekennzeichnet, dass** die Korrektureinrichtung (15) eine mit dem Lenkwinkelgeber (2) in Wirkverbindung stehende Umschalteinrichtung (16) aufweist mittels der eine Geradeausfahrstellung (17a) und zumindest eine Nichtgeradeausfahrstellung (17b; 17c) des Lenkwinkelgebers (2) oder des Lenkantriebs (11) erfassbar ist.

3. Hydraulische Lenkeinrichtung nach Anspruch 2, **dadurch gekennzeichnet, dass** die Umschalteinrichtung (16) eine Geradeausfahrstellung (17a), eine erste Nichtgeradeausfahrstellungen (17b) und eine zweite Nichtgeradeausfahrstellung (17c) aufweist, wobei in der ersten Nichtgeradeausfahrstellungen (17b) und in der zweiten Nichtgeradeausfahrstellung (17c) die Stellung des Lenkwinkelgebers (2) bezüglich der Geradeausfahrstellung (17a) erfassbar ist.

4. Hydraulische Lenkeinrichtung nach einem der Ansprüche 1 bis 3, wobei der Lenkzylinder (12) als doppeltwirkender Zylinder ausgebildet ist, dessen erster Steuerdruckraum (12a) mittels einer ersten Steuerleitung (13a) und dessen zweiter Steuerdruckraum (12b) mittels einer zweiten Steuerleitung (13b) mit dem Lenkventil (3) in Verbindung steht, **dadurch gekennzeichnet, dass** zur Synchronisation der Stellung des Lenkwinkelgebers (2) mit der Stellung des Lenkantriebs (11) der erste Steuerdruckraum (12a) bzw. der zweite Steuerdruckraum (12b) des Lenkzylinders (12) mit dem Behälter (9) in Verbindung bringbar ist.

5. Hydraulische Lenkeinrichtung nach Anspruch 4, **dadurch gekennzeichnet, dass** zur Verbindung des Steuerdruckraums (12a; 12b) mit dem Behälter (9) ein Absperrventil (25; 25a; 25b) vorgesehen ist.

6. Hydraulische Lenkeinrichtung nach Anspruch 5, **dadurch gekennzeichnet, dass** das Absperrventil (25; 25a; 25b) in einer die Steuerleitung (13a; 13b) mit dem Behälter (9) verbindenden Verbindungsleitung (26: 26a; 26b) angeordnet ist.

7. Hydraulische Lenkeinrichtung nach Anspruch 5 oder 6, **dadurch gekennzeichnet, dass** das Absperrventil (25; 25a; 25b) als elektrisch betätigbares, aufsteuerbares Absperrventil ausgebildet ist.

8. Hydraulische Lenkeinrichtung nach einem der Ansprüche 5 bis 7, **dadurch gekennzeichnet, dass** mittels der Korrektureinrichtung (15) bei in der Geradeausfahrstellung (20a) befindlicher Schalteinrichtung (20) und bei in der Nichtgeradeausfahrstellung (17b; 17c) befindlicher Umschalteinrichtung (16) durch eine Beaufschlagung des Absperrventils (25; 25a; 25b) in eine Durchflussstellung eine Verbindung der Steuerleitung (13a; 13b), die über das Lenkventil (3) mit der Druckmittelquelle (5) in Verbindung steht, mit dem Behälter (9) herstellbar ist.

9. Hydraulische Lenkeinrichtung nach einem der Ansprüche 2 bis 8, **dadurch gekennzeichnet, dass** die Umschalteinrichtung (16) als elektrischer Schalter (17), insbesondere elektrischer Wahlschalter, ausgebildet ist.

10. Hydraulische Lenkeinrichtung nach Anspruch 9, **dadurch gekennzeichnet, dass** der Schalter (17) eine Geradeausfahrstellung (17a), eine erste Nichtgeradeausfahrstellung (17b) und eine zweite Nichtgeradeausfahrstellung (17c) aufweist und eingangsseitig mit einer elektrischen Steuerleitung (23) in Verbindung steht, die zu einer elektrischen Energiequelle (22) geführt ist, wobei der Schalter (17) ausgangsseitig an eine erste elektrische Steuerleitung (28a), die zu einem in der ersten Verbindungsleitung (26a), die von der ersten Steuerleitung (13a) zu dem Behälter (9) geführt ist, angeordneten elektrisch betätigbaren Absperrventil (25a) geführt ist, und an eine zweite elektrische Steuerleitung (28b) angeschlossen ist, die zu einem in der zweiten Verbindungsleitung (26b), die von der zweiten Steuerleitung (13b) zu dem Behälter (9) geführt ist, angeordneten elektrisch betätigbaren Absperrventil (25b) geführt ist.

11. Hydraulische Lenkeinrichtung nach Anspruch 10, **dadurch gekennzeichnet, dass** in der ersten Nichtgeradeausfahrstellung (17b) des Lenkwinkelgebers (2) die erste Steuerleitung (13a) über das Lenkventil (3) mit der Druckmittelquelle (5) und in der zweiten Nichtgeradeausfahrstellung (17c) des Lenkwinkelgebers (2) die zweite Steuerleitung (13b) über das Lenkventil (3) mit der Druckmittelquelle (5) Verbindung steht, wobei der Schalter (17) in der ersten Nichtgeradeausfahrstellung (17b) die Verbindung der elektrischen Steuerleitung (23) zur ersten elektrischen Steuerleitung (28a) und in der zweiten Nichtgeradeausfahrstellung (17c) die Verbindung der elektrischen Steuerleitung (23) zur zweiten elektrischen Steuerleitung (28b) herstellt.

12. Hydraulische Lenkeinrichtung nach Anspruch 10 oder 11, **dadurch gekennzeichnet, dass** in der elektrischen Steuerleitung (23) die Schalteinrichtung (20) angeordnet ist, die als elektrischer Schalter (21), insbesondere Schließer, ausgebildet ist, wobei der Schalter (21) bei in der Geradeausfahrstellung (20a) befindlichem Lenkantrieb (11) in eine Schließstellung beaufschlagt ist.

13. Hydraulische Lenkeinrichtung nach einem der Ansprüche 2 bis 8, **dadurch gekennzeichnet, dass** die Umschalteinrichtung (16) als hydraulisches Ventil (35), insbesondere Drehschieberventil, ausgebildet ist.

14. Hydraulische Lenkeinrichtung nach Anspruch 13, **dadurch gekennzeichnet, dass** das Ventil (35) mit dem Lenkwinkelgeber (2) in Wirkverbindung steht und an das Lenkventil (3) angebaut bzw. in das Lenkventil (3) integriert ist.

15. Hydraulische Lenkeinrichtung nach Anspruch 13 oder 14, **dadurch gekennzeichnet, dass** das Ventil (35) als Proportionalventil ausgebildet ist.

16. Hydraulische Lenkeinrichtung nach einem der Ansprüche 13 bis 15, **dadurch gekennzeichnet, dass** das hydraulisches Ventil (35) eine Geradeausfahrstellung (17a), eine erste Nichtgeradeausfahrstellung (17b) und eine zweite Nichtgeradeausfahrstellung (17c) aufweist und eingangsseitig an die Steuerleitungen (13a, 13b) sowie ausgangsseitig an eine zu dem Behälter (9) geführte Verbindungsleitung (26) angeschlossen ist, in der ein Absperrventil (25) angeordnet ist.

17. Hydraulische Lenkeinrichtung nach Anspruch 16, **dadurch gekennzeichnet, dass** in der ersten Nichtgeradeausfahrstellung (17b) des Ventils (35), wobei die erste Steuerleitung (13a) über das Lenkventil (3) mit der Druckmittelquelle (5) in Verbindung steht, die erste Steuerleitung (13a) an die mit dem Behälter (9) in Verbindung stehende Verbindungsleitung (26) und in der zweiten Nichtgeradeausfahrstellung (17c) des Ventils (35), wobei die zweite Steuerleitung (13b) über das Lenkventil (3) mit der Druckmittelquelle (5) in Verbindung steht, die zweite Steuerleitung (13b) an die Verbindungsleitung (26) angeschlossen ist.

18. Hydraulische Lenkeinrichtung nach Anspruch 16 oder 17, wobei das Absperrventil elektrisch betätigbar ist, **dadurch gekennzeichnet, dass** die Schalteinrichtung (20) als elektrischer Schalter (21), insbesondere Schließer, ausgebildet ist, der mit dem Lenkantrieb (11) in Wirkverbindung steht und eingangsseitig an eine elektrische Energiequelle (22) angeschlossen ist, wobei der Schalter (21) ausgangsseitig an eine elektrische Steuerleitung (28) angeschlossen ist, die zu dem in der Verbindungsleitung (26) angeordneten elektrisch betätigbaren Absperrventil (25) geführt ist, wobei der Schalter (21) bei in der Geradeausfahrstellung (20a) befindlichem Lenkantrieb (11) in eine Schließstellung beaufschlagt ist.

19. Hydraulische Lenkeinrichtung nach einem der Ansprüche 5 bis 18, **dadurch gekennzeichnet, dass** das Absperrventil (25; 25a, 25b) am Lenkventil (3) angeordnet oder in das Lenkventil (3) integriert ist.

20. Hydraulische Lenkeinrichtung nach Anspruch 19, **dadurch gekennzeichnet, dass** die Verbindungsleitungen (26, 26a, 26b) im Lenkventil (3) ausgebildet sind.

21. Hydraulische Lenkeinrichtung nach einem der vorangegangenen Ansprüche **gekennzeichnet durch** die Verwendung in einem Flurförderzeug, insbesondere Gabelstapler.

## Claims

1. Hydraulic steering device (1) having a steering angle sensor (2) which is connected to a steering valve (3) which, as a function of the actuation of the steering angle sensor (2), controls the connection of a steering drive (11), which is in particular in the form of a steering cylinder (12), to a pressure medium source (5) and a tank (9), and having a correction device (15) which makes synchronization possible between the position of the steering angle sensor (2) and the position of the steering drive (11), the correction device (15) making it possible to synchronize the position of the steering angle sensor (2) with the position of the steering drive (11) when the steering drive (11) is located in a reference region formed in the region of the straight-on driving position of the steering drive and when the position of the steering angle sensor (2) is different from the reference region, **characterized in that** the correction device (15) has a switching device (20), which is operatively connected to the steering drive (11) and by means of which the straight-on driving position (20a) and a non-straight-on driving position (20b) of the steering drive (11) can be detected.

2. Hydraulic steering device according to Claim 1,
**characterized in that** the correction device (15) has a switchover device (16), which is operatively connected to the steering angle sensor (2) and by means of which a straight-on driving position (17a) and at least one non-straight-on driving position (17b; 17c) of the steering angle sensor (2) or the steering drive (11) can be detected.

3. Hydraulic steering device according to Claim 2,
**characterized in that** the switchover device (16) has a straight-on driving position (17a), a first non-straight-on driving position (17b) and a second non-straight-on driving position (17c), it being possible for the position of the steering angle sensor (2) with respect to the straight-on driving position (17a) to be detected in the first non-straight-on driving position (17b) and in the second non-straight-on driving position (17c).

4. Hydraulic steering device according to one of Claims 1 to 3, the steering cylinder (12) being in the form of a double-acting cylinder, whose first control pressure space (12a) is connected to the steering valve (3) by means of a first control line (13a), and whose second control pressure space (12b) is connected to the steering valve (3) by means of a second control line (13b), **characterized in that**, in order to synchronize the position of the steering angle sensor (2) with the position of the steering drive (11), the first control pressure space (12a) or the second control pressure space (12b) of the steering cylinder (12) can be connected to the tank (9).

5. Hydraulic steering device according to Claim 4,
**characterized in that** a shut-off valve (25; 25a; 25b) is provided for the purpose of connecting the control pressure space (12a; 12b) to the tank (9).

6. Hydraulic steering device according to Claim 5,
**characterized in that** the shut-off valve (25; 25a; 25b) is arranged in a connecting line (26; 26a; 26b), which connects the control line (13a; 13b) to the tank (9).

7. Hydraulic steering device according to Claim 5 or 6, **characterized in that** the shut-off valve (25; 25a; 25b) is in the form of an electrically actuable shut-off valve which can be opened in a controlled manner.

8. Hydraulic steering device according to one of Claims 5 to 7, **characterized in that** a connection between the control line (13a; 13b), which is connected to the pressure medium source (5) via the steering valve (3), and the tank (9) can be produced by means of the correction device (15) when the switching device (20) is located in the straight-on driving position (20a) and when the switchover device (16) is located in the non-straight-on driving position (17b; 17c) by the shut-off valve (25; 25a; 25b) being brought into a throughflow position.

9. Hydraulic steering device according to one of Claims 2 to 8, **characterized in that** the switchover device (16) is in the form of an electrical switch (17), in particular an electrical selector switch.

10. Hydraulic steering device according to Claim 9,
**characterized in that** the switch (17) has a straight-on driving position (17a), a first non-straight-on driving position (17b) and a second non-straight-on driving position (17c) and is connected on the input side to an electrical control line (23) which is passed to an electrical energy source (22), the switch (17) being connected on the output side to a first electrical control line (28a), which is passed to an electrically actuable shut-off valve (25a), which is arranged in the first connecting line (26a) which is passed from the first control line (13a) to the tank (9), and to a second electrical control line (28b), which is passed to an electrically actuable shut-off valve (25b), which is arranged in the second connecting line (26b) which is passed from the second control line (13b) to the tank (9).

11. Hydraulic steering device according to Claim 10,
**characterized in that**, in the first non-straight-on driving position (17b) of the steering angle sensor (2), the first control line (13a) is connected to the pressure medium source (5) via the steering valve (3), and, in the second non-straight-on driving position (17c) of the steering angle sensor (2), the second control line (13b) is connected to the pressure medium source (5) via the steering valve (3), the switch (17), in the first non-straight-on driving position (17b), producing the connection between the electrical control line (23) and the first electrical control line (28a) and, in the second non-straight-on driving position (17c), producing the connection between the electrical control line (23) and the second electrical control line (28b).

12. Hydraulic steering device according to Claim 10 or 11, **characterized in that** the switching device (20) is arranged in the electrical control line (23) and is in the form of an electrical switch (21), in particular a normally open switch, the switch (21) being brought into a closed position when the steering drive (11) is located in the straight-on driving position (20a).

13. Hydraulic steering device according to one of Claims 2 to 8, **characterized in that** the switchover device (16) is in the form of a hydraulic valve (35), in particular a rotary slide valve.

14. Hydraulic steering device according to Claim 13,
**characterized in that** the valve (35) is operatively connected to the steering angle sensor (2) and is attached to the steering valve (3) or integrated in the steering valve (3).

15. Hydraulic steering device according to Claim 13 or 14, **characterized in that** the valve (35) is in the form of a proportional valve.

16. Hydraulic steering device according to one of Claims 13 to 15, **characterized in that** the hydraulic valve (35) has a straight-on driving position (17a), a first non-straight-on driving position (17b) and a second non-straight-on driving position (17c) and is connected on the input side to the control lines (13a, 13b) and on the output side to a connecting line (26), which is passed to the tank (9) and in which a shut-off valve (25) is arranged.

17. Hydraulic steering device according to Claim 16,
**characterized in that**, in the first non-straight-on driving position (17b) of the valve (35) in which the first control line (13a) is connected to the pressure medium source (5) via the steering valve (3), the first control line (13a) is connected to the connecting line (26), which is connected to the tank (9), and, in the second non-straight-on driving position (17c) of the valve (35) in which the second control line (13b) is connected to the pressure medium source (5) via the steering valve (3), the second control line (13b) is connected to the connecting line (26).

18. Hydraulic steering device according to Claim 16 or 17, the shut-off valve being electrically actuable,
**characterized in that** the switching device (20) is in the form of an electrical switch (21), in particular a normally open switch, which is operatively connected to the steering drive (11) and is connected on the input side to an electrical energy source (22), the switch (21) being connected on the output side to an electrical control line (28), which is passed to the electrically actuable shut-off valve (25) which is arranged in the connecting line (26), the switch (21) being brought into a closed position when the steering drive (11) is located in the straight-on driving position (20a).

19. Hydraulic steering device according to one of Claims 5 to 18, **characterized in that** the shut-off valve (25; 25a; 25b) is arranged on the steering valve (3) or is integrated in the steering valve (3).

20. Hydraulic steering device according to Claim 19, **characterized in that** the connecting lines (26, 26a, 26b) are formed in the steering valve (3).

21. Hydraulic steering device according to one of the preceding claims, **characterized by** use in an industrial truck, in particular a fork-lift truck.

## Revendications

1. Dispositif de direction hydraulique (1) comprenant un capteur angulaire de direction (2) qui est en liaison avec une soupape de direction (3) qui commande la connexion d'un entraînement de direction (11) réalisé notamment sous la forme d'un cylindre de direction (12) à une source de fluide sous pression (5) et un récipient (9) en fonction de l'actionnement du capteur angulaire de direction (2), et comprenant un dispositif de correction (15) qui permet une synchronisation entre la position du capteur angulaire de direction (2) et la position de l'entraînement de direction (11), le dispositif de correction (15) permettant une synchronisation de la position du capteur angulaire de direction (2) avec la position de l'entraînement de direction (11) lorsque l'entraînement de direction (11) se trouve dans une région de référence qui est réalisée dans la région de la position de conduite en ligne droite de l'entraînement de direction et dans le cas d'une position du capteur angulaire de direction (2) s'écartant de la région de référence, **caractérisé en ce que** le dispositif de correction (15) présente un dispositif de commutation (20) en liaison coopérante avec l'entraînement de direction (11) au moyen duquel la position de conduite en ligne droite (20a) et une position de conduite non en ligne de droite (20b) de l'entraînement de direction (11) peuvent être détectées.

2. Dispositif de direction hydraulique selon la revendication 1, **caractérisé en ce que** le dispositif de correction (15) présente un dispositif d'inversion (16) en liaison coopérante avec le capteur angulaire de direction (2), au moyen duquel une position de conduite en ligne droite (17a) et au moins une position de conduite non en ligne droite (17b ; 17c) du capteur angulaire de direction ou de l'entraînement de direction (11) peuvent être détectées.

3. Dispositif de direction hydraulique selon la revendication 2, **caractérisé en ce que** le dispositif d'inversion (16) présente une position de conduite en ligne droite (17a), une première position de conduite non en ligne droite (17b) et une deuxième position de conduite non en ligne droite (17c), la position du capteur angulaire de direction (2) pouvant être détectée par rapport à la position de conduite en ligne droite (17a) dans la première position de conduite non en ligne droite (17b) et dans la deuxième position de conduite non en ligne droite (17c).

4. Dispositif de direction hydraulique selon l'une quelconque des revendications 1 à 3, dans lequel le cylindre de direction (12) est réalisé sous la forme d'un cylindre à double action, dont la première chambre de pression de commande (12a) est en liaison avec la soupape de direction (3) au moyen d'une première conduite de commande (13a) et dont la deuxième chambre de pression de commande (12b) est en liaison avec la soupape de direction (3) au moyen d'une deuxième conduite de commande (13b), **caractérisé en ce que** pour la synchronisation de la position du capteur angulaire de direction (2) avec la position de l'entraînement de direction (11), la première chambre de pression de commande (12a), respectivement la deuxième chambre de pression de commande (12b) du cylindre de direction (12) peut être amenée en liaison avec le récipient (9).

5. Dispositif de direction hydraulique selon la revendication 4, **caractérisé en ce que** pour la connexion de la chambre de pression de commande (12a ; 12b) au récipient (9), on prévoit une soupape d'arrêt (25 ; 25a ; 25b).

6. Dispositif de direction hydraulique selon la revendication 5, **caractérisé en ce que** la soupape d'arrêt (25 ; 25a ; 25b) est disposée dans une conduite de connexion (26 ; 26a ; 26b) reliant la conduite de commande (13a ; 13b) au récipient (9).

7. Dispositif de direction hydraulique selon la revendication 5 ou 6, **caractérisé en ce que** la soupape d'arrêt (25, 25a ; 25b) est réalisée sous la forme d'une soupape d'arrêt commandable, actionnable électriquement.

8. Dispositif de direction hydraulique selon l'une quelconque des revendications 5 à 7, **caractérisé en ce qu'**au moyen du dispositif de correction (15), lorsque le dispositif de commutation (20) se trouve dans la position de conduite en ligne droite (20a) et que le dispositif d'inversion (16) se trouve dans la position de conduite non en ligne droite (17b ; 17c), une connexion au récipient (9) de la conduite de commande (13a ; 13b) qui est en liaison avec la source de fluide sous pression (5) par le biais de la soupape de direction (3) peut être créée par une sollicitation de la soupape d'arrêt (25 ; 25a ; 25b) dans une position d'écoulement.

9. Dispositif de direction hydraulique selon l'une quelconque des revendications 2 à 8, **caractérisé en ce que** le dispositif d'inversion (16) est réalisé sous la forme d'un commutateur électrique (17), notamment d'un commutateur sélectif électrique.

10. Dispositif de direction hydraulique selon la revendication 9, **caractérisé en ce que** le commutateur (17) présente une position de conduite en ligne droite (17a), une première position de conduite non en ligne droite (17b) et une deuxième position de conduite non en ligne droite (17c) et est en liaison du côté de l'entrée avec une conduite de commande électrique (23) qui est guidée vers une source d'énergie électrique (22), le commutateur (17) étant raccordé du côté de la sortie à une première conduite de commande électrique (28a) qui est guidée vers une soupape d'arrêt (25a) actionnable électriquement et disposée dans la première conduite de connexion (26a) qui est guidée depuis la première conduite de commande (13a) vers le récipient (9), et à une deuxième conduite de commande électrique (28b) qui est guidée vers une soupape d'arrêt (25b) actionnable électriquement et disposée dans la deuxième conduite de connexion (26b), qui est guidée depuis la deuxième conduite de commande (13b) vers le récipient (9).

11. Dispositif de direction hydraulique selon la revendication 10, **caractérisé en ce que** dans la première position de conduite non en ligne droite (17b) du capteur angulaire de direction (2), la première conduite de commande (13a) est en liaison par le biais de la soupape de direction (3) avec la source de fluide sous pression (5) et dans la deuxième position de conduite non en ligne droite (17c) du capteur angulaire de direction (2) la deuxième conduite de commande (13b) est en liaison par le biais de la soupape de direction (3) avec la source de fluide sous pression (5), le commutateur (17), dans la première position de conduite non en ligne droite (17b) réalisant la connexion de la conduite de commande électrique (23) à la première conduite de commande électrique (28a) et dans la deuxième position de conduite non en ligne droite (17c) réalisant la connexion de la conduite de commande électrique (23) à la deuxième conduite de commande électrique (28b).

12. Dispositif de direction hydraulique selon la revendication 10 ou 11, **caractérisé en ce que** le dispositif de commutation (20) est disposé dans la conduite de commande électrique (23), et est réalisé sous la forme d'un commutateur électrique (21), notamment d'un contacteur, le commutateur (21) étant sollicité dans une position de fermeture lorsque l'entraînement de direction (11) se trouve dans la position de conduite en ligne droite (20a).

13. Dispositif de direction hydraulique selon l'une quelconque des revendications 2 à 8, **caractérisé en ce que** le dispositif d'inversion (16) est réalisé sous la forme d'une soupape hydraulique (35), notamment d'une soupape à tiroir rotatif.

14. Dispositif de direction hydraulique selon la revendication 13, **caractérisé en ce que** la soupape (35) est en liaison coopérante avec le capteur angulaire de direction (2) et est montée sur la soupape de direction (3) ou est intégrée dans la soupape de direction (3).

15. Dispositif de direction hydraulique selon la revendication 13 ou 14, **caractérisé en ce que** la soupape (35) est réalisée sous la forme d'une soupape proportionnelle.

16. Dispositif de direction hydraulique selon l'une quelconque des revendications 13 à 15, **caractérisé en ce que** la soupape hydraulique (35) présente une position de conduite en ligne droite (17a), une première position de conduite non en ligne droite (17b) et une deuxième position de conduite non en ligne droite (17c) et est raccordée du côté de l'entrée aux conduites de commande (13a, 13b) ainsi que du côté de la sortie à une conduite de connexion (26) allant au récipient (9), dans laquelle est disposée une soupape d'arrêt (25).

17. Dispositif de direction hydraulique selon la revendication 16, **caractérisé en ce que** dans la première position de conduite non en ligne droite (17b) de la soupape (35), dans laquelle la première conduite de commande (13a) est en liaison par le biais de la soupape de direction (3) avec la source de fluide sous pression (5), la première conduite de commande (13a) est raccordée à la conduite de connexion (26) en liaison avec le récipient (9) et dans la deuxième position de conduite non en ligne droite (17c) de la soupape (35), dans laquelle la deuxième conduite de commande (13b) est en liaison par le biais de la soupape de direction (3) avec la source de fluide sous pression (5), la deuxième conduite de commande (13b) est raccordée à la conduite de connexion (26).

18. Dispositif de direction hydraulique selon la revendication 16 ou 17, dans lequel la soupape d'arrêt est actionnable électriquement, **caractérisé en ce que** le dispositif de commutation (20) est réalisé sous la forme d'un commutateur électrique (21), notamment d'un contacteur, qui est en liaison coopérante avec l'entraînement de direction (11) et qui est raccordé du côté de l'entrée à une source d'énergie électrique (22), le commutateur (21) étant raccordé du côté de la sortie à une conduite de commande électrique (28), qui est guidée vers la soupape d'arrêt (25) actionnable électriquement et disposée dans la conduite de connexion (26), le commutateur (21) étant sollicité dans une position de fermeture lorsque l'entraînement de direction (11) se trouve dans la position de conduite en ligne droite (20a).

19. Dispositif de direction hydraulique selon l'une quelconque des revendications 5 à 18, **caractérisé en ce que** la soupape d'arrêt (25 ; 25a, 25b) est disposée sur la soupape de direction (3) ou est intégrée dans la soupape de direction (3).

20. Dispositif de direction hydraulique selon la revendication 19, **caractérisé en ce que** les conduites de connexion (26, 26a, 26b) sont réalisées dans la soupape de direction (3).

21. Dispositif de direction hydraulique selon l'une quelconque des revendications précédentes, **caractérisé par** l'utilisation dans un chariot de manutention, notamment un chariot élévateur à fourche.
